# EUROPÄISCHE PATENTSCHRIFT

(11) **EP 3 734 176 B1**
(45) Veröffentlichungstag und Bekanntmachung des Hinweises auf die Patenterteilung: **12.07.2023**
(21) Anmeldenummer: 20172033.1
(22) Anmeldetag: 29.04.2020
(51) Int. Cl.: F24F 11/77, F04D 27/00, F24F 130/40

(54) **VORRICHTUNG ZUR BETRIEBSÜBERWACHUNG EINES VENTILATORS**
DEVICE FOR MONITORING THE OPERATION OF A FAN
DISPOSITIF DE SURVEILLANCE DU FONCTIONNEMENT D'UN VENTILATEUR

(30) Priorität: 29.04.2019 DE 102019111076
(43) Veröffentlichungstag der Anmeldung: 04.11.2020
(73) Patentinhaber: ebm-papst Landshut GmbH, 84030 Landshut (DE)
(72) Erfinder: WEINGART, Markus, 84056 Rottenburg (DE); ERNST, Tobias, 84178 Kröning (DE)
(74) Vertreter: Staeger & Sperling Partnerschaftsgesellschaft mbB

(56) Entgegenhaltungen:
- US-A1- 2007 153 443
- US-A1- 2010 054 957
- US-B2- 9 080 575

## Beschreibung

Die Erfindung betrifft eine Vorrichtung und ein Verfahren zur Betriebsüberwachung eines Ventilators, Lüfters oder einer Gebläseanordnung, insbesondere in einer Gastherme oder einer klimatechnischen Einrichtung.

Ventilatoren, Lüfter und Gebläseanordnungen unterliegen einem anlagespezifischen betriebsabhängigen Verschleiß, so dass es schwierig ist, die Lebensdauer vorherzusagen, um mittels vorbeugender Instandhaltungsmaßnahmen den Lüfter möglichst kurz vor Erreichen seines Versagenszeitpunktes auszutauschen. Ein prophylaktischer Tausch wäre teuer und teilweise völlig überflüssig. Im Stand der Technik gibt es diverse Verfahren, um den Zustand des Lüfters im Betrieb zu beurteilen, wie zum Beispiel schwingungsdiagnostische Verfahren, die allerdings aufwendiges technisches Equipment zur Signalerfassung und Auswertung erfordern. Dies führt zu höheren Kosten in der Anlagenherstellung und im Anlagenbetrieb.

Aus der US 2007 / 153 443 A1 ist eine Vorrichtung zum Überwachen eines Ventilators bekannt, bei der mittels eines Mikrofones Ventilatorgeräusche erfasst werden.

Der Erfindung liegt deshalb die Aufgabe zugrunde, vorbesagte Nachteile zu überwinden und eine einfachere und kostengünstig realisierbare Lösung bereit zu stellen, die zuverlässig den Zustand eines Ventilators überwachen kann. Diese Aufgabe wird durch die Merkmalskombination gemäß Patentanspruch 1 gelöst.

Erfindungsgemäß wird hierzu eine Vorrichtung zur Betriebsüberwachung eines mit der Vorrichtung zu verbindenden Ventilators, der mit einem elektrischen Motor antreibbar verbunden ist, vorgeschlagen, umfassend eine Schaltungsanordnung mit einer Motorelektronik, aufweisend einen Mikrocontroller zur Motorsteuerung und ein Mikrofon zur Erfassung der Ventilatorgeräusche (Geräuschspektrum) beim Betrieb des Ventilators, wobei ferner eine Signalaufbereitungsvorrichtung vorgesehen ist, um die vom Mikrofon erfassten analogen Signale (korrespondierend zum Geräuschspektrum) bandpassgefiltert für den Mikrocontroller aufzubereiten, so dass der Mikrokontroller diese bandpassgefilterten Signale auswerten kann.

Die Schallemission des Gebläses wird auf diese Weise über das Mikrofon, das sich vorzugsweise auf der Motorelektronik befindet, aufgenommen, aufbereitet und per Mikrocontroller anschließend ausgewertet. Um Ressourcen und Kosten beim Mikrocontroller zu sparen, kann dazu der ohnehin benötigte Motorcontroller die Signal-Auswertung zusätzlich zu seiner eigentlichen Motorsteueraufgabe auswerten. Dies wird mit Vorteil durch eine relativ geringe Abtastrate des Nutzsignals ermöglicht, was durch eine Signalaufbereitungsvorrichtung erfolgt.

In einer besonderen vorteilhaften Ausgestaltung der Erfindung ist daher vorgesehen, dass sowohl die Motorsteuerung als auch die Signalauswertung der vom vorausgewertet werden. Hierzu ist in einer bevorzugten Ausführungsform der Erfindung vorgesehen, dass die Signalaufbereitungsvorrichtung einen Signalverstärker aufweist, um die vom Mikrofon erfassten analogen Signale zunächst um einen bestimmten Faktor zu verstärken, bevor eine Weiterverarbeitung der Signale erfolgt.

Weiter ist mit Vorteil vorgesehen, dass das Mikrofon zusammen mit dem Mikrocontroller auf einer gemeinsamen Schaltungsanordnung, insbesondere einer gemeinsamen Leiterplatte angeordnet ist.

Gemäß der Erfindung ist vorgesehen, dass die Signalaufbereitungsvorrichtung einen Bandpassfilter aufweist, der ausgebildet ist, um die vom Mikrofon erfassten und insbesondere verstärkten analogen Signale in einem oder mehreren vorbestimmten Frequenzbereichen zu filtern und nur einen gewünschten vorbestimmten Frequenzbereich der Signale zur Signalauswertung an eine nachgeschaltete Signalverarbeitungseinheit durchzulassen.

Die Erfindung sieht in einer ebenfalls vorteilhaften Ausgestaltung vor, die Signalaufbereitungsvorrichtung optional mit einer analog arbeitenden Peak-Detektor-Schaltung auszustatten, die ausgebildet ist, vom Bandpassfilter erhaltene Signale auf Vorhandensein von Signalen einer bestimmten Amplitude oder Amplitudenänderungen bei einer bestimmten Frequenz zu analysieren und die so detektierten Signale bestimmter Frequenz oder dazu korrespondierende Daten als digitale Daten einer bestimmten Abtastrate an den Mikrocontroller weiter zu geben. Dabei ist es besonders günstig, wenn die Abtastrate zum Abtasten der Signale zur Verarbeitung für den Mikrocontroller einstellbar ist, so dass insbesondere eine niedrige Abtastrate und damit niedrige Datenmenge an den Mikrocontroller zur Datenverarbeitung gelangt. Bei einer quasikontinuierlichen Überwachung genügt es daher, die Abtastrate zum Beispiel nach einer Neuinstallation anfänglich niedriger zu belassen als zu Zeiten bei denen erfahrungsgemäß erste Verschleißerscheinungen auftreten.

Ein weiterer Aspekt der vorliegenden Erfindung betrifft ein Verfahren zur Betriebsüberwachung eines Ventilators und insbesondere mit einer wie zuvor beschriebenen Vorrichtung mit den folgenden Schritten:
a. Erfassen des vom Ventilator im Betrieb erzeugten Geräuschspektrums mit einem Mikrofon (12) in Form von analogen Signalen;
b. Aufbereiten der analogen Signale durch einen Signalverstärker und Übertragung der verstärkten Signale an einen Bandpassfilter, der die Signale bandpassfiltert;
c. wobei mittels dem Bandpassfilter die vom Mikrofon erfassten und insbesondere verstärkten analogen Signale in einem oder mehreren vorbestimmten Frequenzbereichen gefiltert werden und nur ein gewünschter vorbestimmter Frequenzbereich der Signale zur Signalauswertung an eine nachgeschaltete Signalverarbeitungseinheit durchgelassen wird;
d. Übermittlung der vom Bandpassfilter durchgelassenen nicht gefilterten Signale an eine Peak-Detektor-Schaltung, die ausgebildet ist zur Analyse und Detektion von Amplitudenmaxima bestimmter Frequenz, wobei die so detektierten Daten dann in Form von digitalen Signalen an einen Mikrocontroller, vorzugsweise den zur Motorsteuerung vorgesehenen Mikrocontroller mit einer vorbestimmten Abtastrate übertragen werden sowie e. Auswertung der von der Peak-Detektor-Schaltung erhaltener digitaler Signale, um daraus eine Information über den Betriebszustand des Ventiltors zu gewinnen.

Letzteres kann zum Beispiel durch das Auswerten von bestimmten Amplituden bei bestimmten Frequenzen sein. So kann sich ein signifikanter Peak mit der Zeit in seiner Amplitude zunehmend verändern, so dass man aus der ersten zeitlichen Ableitung d(A_{f}(t)/dt der über die Zeit erfasste Amplitudenkurve A(t) einer bestimmten Frequenz f eine Aussage über den Zustand des Ventilators machen kann.

Besonders vorteilhaft ist es dabei, wenn man ganz bestimmte akustischen Frequenzen f aus dem Frequenzspektrum mittels zuvor gewonnener empirischer Daten bestimmten strukturellen Ventilatorteilen oder Verschleißteilen zuordnet, um konkret zu wissen, ob es sich bei einer Fehlerdetektion um z. B. einen Lagerverschleiß, einen Flügelschaden, einen Motorwicklungsschaden etc. handelt, so dass man gezielter das Schadensbild aus der Auswertung des Schallspektrums erfassen kann.

Mit besonderem Vorteil wird hierzu eine Kurvenschar der akustischen Amplituden unterschiedlicher Frequenzen im Bereich der bandpassgefilterten Frequenzen über die Zeit (mit einer bestimmten Abtatsrate) erfasst und wie zuvor erläutert, ausgewertet.

Das Verfahren lässt sich besonders kosteneffizient und bauteiloptimiert durchführen, wenn aufgrund der gewählten niedrigen Abtastrate der Mikrocontroller synchron während seiner aktiven Funktion zur Motorsteuerung die Signalauswertung der erhaltenen Signale vornimmt.

Ein weiterer Aspekt der vorliegenden Erfindung betrifft eine Gastherme umfassend einen Lüfter, ausgestattet mit einer wie zuvor beschriebenen Vorrichtung. Andere vorteilhafte Weiterbildungen der Erfindung sind in den Unteransprüchen gekennzeichnet und werden nachstehend zusammen mit der Beschreibung der bevorzugten Ausführung der Erfindung anhand der Figuren näher dargestellt.

Es zeigt:

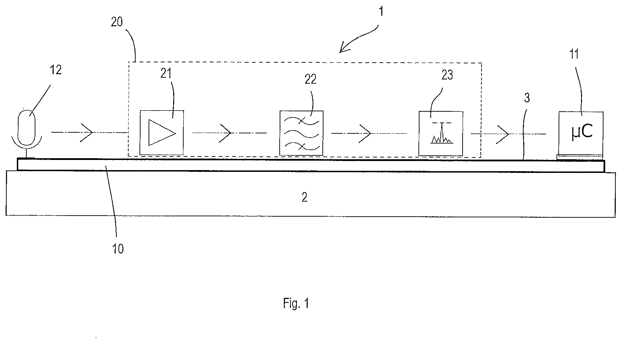

- Fig. 1: eine schematische Konzeptzeichnung der Realisierung einer erfindungsgemäßen Vorrichtung.

Im Folgenden wird die Erfindung anhand des Ausführungsbeispiels gemäß Figur 1 exemplarisch beschrieben.

Die Vorrichtung 1 ist spezifisch ausgebildet zur Betriebsüberwachung eines nicht dargestellten Ventilators, der mit einem elektrischen Motor 2 antreibbar verbunden ist. Die Vorrichtung 1 umfasst hierzu eine Schaltungsanordnung mit einer Motorelektronik 10, wobei die Motorelektronik einen Mikrocontroller 11 zur Motorsteuerung besitzt. Zusätzlich ist ein Mikrofon 12 auf der Motorelektronikleiterplatte 3 zur Erfassung der Ventilatorgeräusche beim Betrieb des Ventilators angeordnet.

Die gezeigte Signalaufbereitungsvorrichtung 20 ist vorgesehen, um die vom Mikrofon 12 erfassten analogen Signale bandpassgefiltert für den Mikrocontroller 11 aufzubereiten. Der Mikrokontroller 11 ist ausgebildet die erhaltenen bandpassgefilterten Signale auszuwerten. Hierzu stehen unterschiedliche Auswertemethoden zur Verfügung.

Die Signalaufbereitungsvorrichtung 20 besitzt einen Signalverstärker 21 zur Verstärkung der vom Mikrofon 12 erfassten analogen akustischen Signale.

Dahinter befindet sich ein Bandpassfilter 22, der ausgebildet ist, um die vom Signalverstärker 21 verstärkten analogen Signale in einem oder mehreren vorbestimmten Frequenzbereichen zu filtern und nur einen gewünschten vorbestimmten Frequenzbereich der Signale zur nachfolgenden Signalauswertung an eine nachgeschaltete Signalverarbeitungseinheit durchzulassen.

Diese nachgeschaltete Einheit ist eine analoge Peak-Detektor-Schaltung 23 zur Detektion von Peaks in dem bandpassgefilterten akustischen Frequenzspektrum. Die Peak-Detektor-Schaltung 23 ist daher ausgebildet, vom Bandpassfilter erhaltene Signale auf Vorhandensein von Signalen einer bestimmten Amplitude oder Amplitudenänderungen bei einer bestimmten Frequenz zu analysieren und die so detektierten Signale bestimmter Frequenz oder dazu korrespondierende Daten als Digitale Daten mit einer bestimmten Abtastrate an den Mikrocontroller 11 weiter zu geben.

Die Erfindung beschränkt sich in ihrer Ausführung nicht auf die vorstehend angegebenen bevorzugten Ausführungsbeispiele. Vielmehr ist eine Anzahl von Varianten denkbar, welche von der dargestellten Lösung auch bei grundsätzlich anders gearteten Ausführungen Gebrauch macht.

## Patentansprüche

1. Vorrichtung (1) zur Betriebsüberwachung eines mit der Vorrichtung zu verbindenden Ventilators, der mit einem elektrischen Motor (2) antreibbar verbunden ist, umfassend eine Schaltungsanordnung mit einer Motorelektronik (10) aufweisend einen Mikrocontroller (11) zur Motorsteuerung und ein Mikrofon (12) zur Erfassung der Ventilatorgeräusche beim Betrieb des Ventilators, **dadurch gekennzeichnet, dass** ferner eine Signalaufbereitungsvorrichtung (20) vorgesehen ist, um die vom Mikrofon (12) erfassten analogen Signale bandpassgefiltert für den Mikrocontroller (11) aufzubereiten, so dass der Mikrokontroller (11) diese bandpassgefilterten Signale auswerten kann, wobei die Signalaufbereitungsvorrichtung (20) einen Bandpassfilter (22) aufweist, der ausgebildet ist, um die vom Mikrofon (12) erfassten und insbesondere verstärkten analogen Signale in einem oder mehreren vorbestimmten Frequenzbereichen zu filtern und nur einen gewünschten vorbestimmten Frequenzbereich der Signale zur Signalauswertung an eine nachgeschaltete Signalverarbeitungseinheit durchzulassen.

2. Vorrichtung nach Anspruch 1, **dadurch gekennzeichnet, dass** sowohl die Motorsteuerung als auch die Signalauswertung der vom Mikrofon erfassten Signale mittels dem insbesondere einen Mikrocontroller (11) realisiert sind.

3. Vorrichtung nach Anspruch 1 oder 2, **dadurch gekennzeichnet, dass** das Mikrofon (12) zusammen mit dem Mikrocontroller (11) auf einer gemeinsamen Schaltungsanordnung, insbesondere einer gemeinsamen Leiterplatte (3) angeordnet ist.

4. Vorrichtung nach einem der vorhergehenden Ansprüche, **dadurch gekennzeichnet, dass** die Signalaufbereitungsvorrichtung (20) einen Signalverstärker (21) aufweist, um die vom Mikrofon (12) erfassten analogen Signale um einen bestimmten Faktor zu verstärken.

5. Vorrichtung nach einem der vorhergehenden Ansprüche, **dadurch gekennzeichnet, dass** die Signalaufbereitungsvorrichtung (20) eine analoge Peak-Detektor-Schaltung (23) aufweist, die ausgebildet ist, vom Bandpassfilter erhaltene Signale auf Vorhandensein von Signalen einer bestimmten Amplitude oder Amplitudenänderungen bei einer bestimmten Frequenz zu analysieren und die so detektierten Signale bestimmter Frequenz oder dazu korrespondierende Daten als Digitale Daten einer bestimmten Abtastrate an den Mikrocontroller (11) weiter zu geben.

6. Vorrichtung nach einem der vorhergehenden Ansprüche, **dadurch gekennzeichnet, dass** die Abtastrate zum Abtasten der Signale für den Mikrocontroller (11) einstellbar ist, so dass insbesondere eine niedrige Abtastrate und damit niedrige Datenmenge an den Mikrocontroller (11) zur Datenverarbeitung gelangt.

7. Verfahren zum Betreiben einer Vorrichtung gemäß wenigstens Anspruch 5 und optional gemäß Anspruch 6 mit den folgenden Schritten:
a. Erfassen des vom Ventilator im Betrieb erzeugten Geräuschspektrums mit dem Mikrofon (12) in Form von analogen Signalen;
b. Aufbereiten der analogen Signale durch den Signalverstärker und Übertragung der verstärkten Signale an den Bandpassfilter, der die Signale bandpassfiltert;
c. wobei mittels dem Bandpassfilter (22) die vom Mikrofon (12) erfassten und insbesondere verstärkten analogen Signale in einem oder mehreren vorbestimmten Frequenzbereichen gefiltert werden und nur ein gewünschter vorbestimmter Frequenzbereich der Signale zur Signalauswertung an eine nachgeschaltete Signalverarbeitungseinheit durchgelassen wird;
d. Übermittlung der vom Bandpassfilter durchgelassenen nicht gefilterten Signale an die Peak-Detektor-Schaltung zur Analyse und Detektion von Amplitudenmaxima bestimmter Frequenz, wobei die so detektierten Daten von analog nach digital gewandelt werden und an den Mikrocontroller (11) in Form von digitalen Signalen mit einer vorbestimmten Abtastrate übertragen werden;
e. Auswertung der von der Peak-Detektor-Schaltung erhaltener digitaler Signale, um daraus eine Information über den Betriebszustand des Ventiltors zu gewinnen.

8. Verfahren nach Anspruch 7, **dadurch gekennzeichnet, dass** der Mikrocontroller (11) synchron während seiner aktiven Funktion zur Motorsteuerung die Signalauswertung der erhaltenen Signale vornimmt.

9. Gastherme umfassend einen Lüfter, ausgestattet mit einer Vorrichtung gemäß einem der Ansprüche 1 bis 6.

## Claims

1. A device (1) for monitoring the operation of a fan to be connected to the device and drivably connected to an electric motor (2), comprising a circuit arrangement with motor electronics (10) having a microcontroller (11) for motor control and a microphone (12) for sensing fan noise during operation of the fan, **characterized in that** a signal conditioning device (20) is further provided to process the analogous signals sensed by the microphone (12) in a bandpass-filtered manner for the microcontroller (11) such that the microcontroller (11) can evaluate those bandpass-filtered signals, wherein the signal conditioning device (20) has a bandpass filter (22) formed to filter the signals sensed and, in particular, amplified by the microphone (12) in one or more predetermined frequency ranges and to allow only a desired predetermined frequency range of the signals to pass to a downstream signal processing unit for signal evaluation.

2. The device according to claim 1, **characterized in that** both the motor control and the signal evaluation of the signals sensed by the microphone are realized by means of the microcontroller (11) in particular.

3. The device according to claim 1 or 2, **characterized in that** the microphone (12) along with the microcontroller (11) is arranged on a common circuit arrangement, in particular a common circuit board (3).

4. The device according to any one of the preceding claims, **characterized in that** the signal conditioning device (20) has a signal amplifier (21) to amplify the analogous signals sensed by the microphone (12) by a specific factor.

5. The device according to any one of the preceding claims, **characterized in that** the signal conditioning device (20) has an analogous peak detector circuit (23) formed to analyze signals obtained from the bandpass filter for presence of signals of a specific amplitude or amplitude changes at a specific frequency and to transfer the signals of a specific frequency thus detected or any data corresponding thereto as digital data of a specific sample rate to the microcontroller (11).

6. The device according to any one of the preceding claims, **characterized in that** the sample rate for sampling the signals for the microcontroller (11) is adjustable such that, in particular, a low sample rate and therefore low amount of data reaches the microcontroller (11) for data processing.

7. A method for operating a device according to at least claim 5 and optionally according to claim 6 with the following steps:
a. sensing the noise spectrum generated by the fan when in operation with the microphone (12) in the form of analogous signals;
b. conditioning the analogous signals by the signal amplifier and transmitting the amplified signals to the bandpass filter that bandpass filters the signals;
c. wherein, by means of the bandpass filter (22), the signals sensed and, in particular, amplified by the microphone (12) are filtered in one or more predetermined frequency ranges, and only a desired predetermined frequency range of the signals is allowed to pass to a downstream signal processing unit for signal evaluation;
d. conveying the unfiltered signals that were allowed to pass by the bandpass filter to the peak detector circuit for analysis and detection of amplitude maximums of a specific frequency, wherein the data thus detected is converted from analog to digital and is transmitted to the microcontroller (11) in the form of digital signals with a predetermined sample rate;
e. evaluating the digital signals obtained by the peak detector circuit to attain a piece of information about the operating state of the fan therefrom.

8. The method according to claim 7, **characterized in that** the microcontroller (11) synchronously conducts the signal evaluation of the obtained signals during its active function for motor control.

9. A gas boiler comprising a fan equipped with a device according to any one of claims 1 to 6.

## Revendications

1. Dispositif (1) de surveillance du fonctionnement d'un ventilateur à connecter au dispositif, et qui est connecté en entraînement à un moteur électrique (2), comprenant un agencement de circuit avec une électronique de moteur (10) comportant un microcontrôleur (11) pour la commande du moteur et un microphone (12) pour détecter les bruits du ventilateur pendant le fonctionnement du ventilateur, **caractérisé en ce qu'**un dispositif de traitement de signaux (20) est également prévu pour traiter les signaux analogiques détectés par le microphone (12) avec un filtrage passe-bande pour le microcontrôleur (11) de sorte que le microcontrôleur (11) peut évaluer ces signaux filtrés en passe-bande, dans lequel le dispositif de traitement de signaux (20) comporte un filtre passe-bande (22) qui est conçu pour filtrer les signaux analogiques détectés et notamment amplifiés par le microphone (12) dans une ou plusieurs plages de fréquences prédéterminées et pour ne laisser passer qu'une plage de fréquences prédéterminée souhaitée des signaux vers une unité de traitement de signaux en aval pour l'évaluation du signal.

2. Dispositif selon la revendication 1, **caractérisé en ce qu'**à la fois la commande du moteur et l'évaluation des signaux détectés par le microphone sont mises en oeuvre au moyen notamment d'un microcontrôleur (11).

3. Dispositif selon la revendication 1 ou 2, **caractérisé en ce que** le microphone (12) est agencé avec le microcontrôleur (11) sur un circuit commun, notamment une carte de circuit imprimé commune (3).

4. Dispositif selon l'une des revendications précédentes, **caractérisé en ce que** le dispositif de traitement de signaux (20) comporte un amplificateur de signaux (21) afin d'amplifier les signaux analogiques détectés par le microphone (12) d'un facteur spécifique.

5. Dispositif selon l'une des revendications précédentes, **caractérisé en ce que** le dispositif de traitement de signaux (20) comporte un circuit détecteur de crête analogique (23) qui est conçu pour analyser les signaux reçus du filtre passe-bande pour y détecter la présence de signaux d'une amplitude spécifique ou des changements d'amplitude à une fréquence spécifique et transmettre les signaux ainsi détectés d'une certaine fréquence ou les données correspondantes en tant que données numériques d'une certaine fréquence d'échantillonnage au microcontrôleur (11).

6. Dispositif selon l'une des revendications précédentes, **caractérisé en ce que** la fréquence d'échantillonnage pour échantillonner les signaux destinés au microcontrôleur (11) est réglable, de sorte qu'en particulier une faible fréquence d'échantillonnage et donc un faible volume de données parviennent au microcontrôleur (11) pour le traitement des données.

7. Procédé de fonctionnement d'un dispositif selon au moins la revendication 5 et éventuellement selon la revendication 6 comportant les étapes suivantes :
a. détection du spectre de bruit généré par le ventilateur pendant le fonctionnement avec le microphone (12) sous la forme de signaux analogiques ;
b. traitement des signaux analogiques par l'amplificateur de signaux et transmission des signaux amplifiés au filtre passe-bande qui filtre en passe-bande les signaux ;
c. dans lequel les signaux analogiques détectés par le microphone (12) et en particulier amplifiés sont filtrés dans une ou plusieurs plages de fréquences prédéterminées au moyen du filtre passe-bande (22) et seule une plage de fréquences prédéterminée souhaitée des signaux est autorisée à passer vers une unité de traitement de signaux en aval pour l'évaluation du signal ;
d. transmission des signaux non filtrés qui sont passés par le filtre passe-bande au circuit détecteur de crête pour analyse et détection des maxima d'amplitude d'une fréquence spécifique, dans lequel les données ainsi détectées sont converties d'analogique en numérique, et sont transmises au microcontrôleur (11) sous forme de signaux numériques avec un taux d'échantillonnage prédéterminé ;
e. évaluation des signaux numériques obtenus à partir du circuit de détection de crête afin d'obtenir des informations sur l'état de fonctionnement du ventilateur.

8. Procédé selon la revendication 7, **caractérisé en ce que** le microcontrôleur (11) effectue de manière synchrone l'évaluation des signaux reçus pendant sa fonction active de commande du moteur.

9. Chaudière à gaz comprenant un ventilateur, équipé d'un dispositif selon l'une des revendications 1 à 6.
